# EUROPEAN PATENT APPLICATION

(11) **EP 2 144 454 A1**
(43) Date of publication of application: **13.01.2010**
(21) Application number: 08740603.9
(22) Date of filing: 17.04.2008
(51) Int. Cl.: H04Q 7/38

(54) **TRACKING AREA SIGNAL PROCESSING IN MOBILE TELEPHONE MOBILE RADIO COMMUNICATION NETWORK**

(30) Priority: 18.04.2007 GB 0707455
(71) Applicant: Nec Corporation, Tokyo 108-8001 (JP)
(72) Inventor: TEASDALE, Julie, Tokyo 108-8001 (JP); IANEV, Iskren, Tokyo 108-8001 (JP)
(74) Representative: Glawe, Delfs, Moll
(86) International application number: PCT/JP2008/057541
(87) International publication number: WO 2008/130013

(57) **Abstract**

The present invention provides for a method of controlling tracking area signaling within a cellular mobile radio communications network and comprising the steps of, determining if the mobile radio communications devices is stationary, providing an indication to the network that the mobile radio communications device is stationary, and in the network, assigning at least one tracking area and/or an equivalent tracking area list to the mobile radio communications device responsive to the indication that the mobile radio communications device is stationary.

## Description

The present invention relates to tracking area signalling within a cellular mobile radio communications network and, in particular, to a method of controlling such signalling and to a related mobile radio communications device and mobile radio communications network device.

Tracking Areas (TA) within mobile radio communications networks are widely adopted for assisting with mobile radio communications device User Equipment (UE) registration procedures since such procedures can be based upon UE mobility between statistically defined TAs. Within GSM networks the TA is identified as a Location Area, and within GPRS and UTRAN systems, the TA is identified to as a Routing Area.

These known TA-based registration procedures require that the UE performs registration when the cell that it is camped on broadcasts a TA that is different from the TA that the UE is currently registered with.

While such a registration procedure is advantageously simple, potential problems and limitations have nevertheless been identified particularly due to the fixed size of the TA.

For example, if the TA is found to be relatively small, the volume of signalling is high due to the requirement for more frequent registrations. Such an increase in signalling traffic is particularly prevalent should there be a number of UEs that are fast moving into, and out of, the TA.

In comparison, if the TA is relatively large, an overload in paging signalling can arise due to the relatively large number of UEs associated with that larger TA. This potential overloading problem is particularly prevalent if the UE(s) is/are are likely to be stationary.

Further, if the UE is found to be stationary but located near to a boarder between different TAs, then continually alternating, or "ping-pong" registrations can occur.

Also, localised spikes in uplink traffic can arise due to the simultaneous registrations required when a large number of UEs cross from one TA to another TA when, for example, the owners of such UEs might all be travelling together, for example by way of a train carriage or coach.

With such limitations and problems in mind, discussions have occurred at various 3GPP meetings and, in particular, in order to avoid excessive TA update signaling within Long Term Evolution (LTE) devices located within the boarder region between two TAs.

Suggested solutions as discussed in for example SAE 3GPP TR23.882, section 7.3.2 allow for one LTE cell to belong to multiple TAs, and also allow for some TAs to partially overlap. Also, some proposals relate to the allocation of multiple TAs within a common UE terminal.

When using overlapping TAs, the UE does not update its TA until it fully exits from the TA and this, to some extent, allows for a hysteresis which assists in reducing ping-pong registrations at TA boarders.

Further, several levels of TAs can be configured within a cell so as to provide for a hierarchical TA selection. Then, within the same cell, the UE can be assigned one of a number of different TAs of different sizes. This can assist in at least partially dealing with problems arising from slow, and fast, moving UEs and can again serve to limit the likely occurrence of ping-pong registrations at TA boarders. However, organisational and control requirements, i.e. how to measure the speed of the moving UE, and how to organise the particular TA levels within the hierarchy, and the entity that serves to decide which TA is selected, nevertheless remains for FFS.

With regard to the arrangement in which a UE is associated with one or more Tas during the TA update procedure, when the UE reselects to a new cell where the TA is not included within the System Information (SI), the UE is arranged to trigger the TA update procedure. Such a system can be adopted in relation to both fixed boarder TA configuration and overlapping/hierarchial TA configurations. Again, principles as to how to decide on the TA equivalent list remain for FFS.

However, it is nevertheless considered that the subject matter of the above mentioned proposals remains disadvantageously limited insofar as problems and limitation encountered within the current art remain and in particular, those associated with the paging overload when the UE is found to be stationary in a larger TA.

The present invention therefore seeks to provide for a method of controlling TA signalling, and related mobile radio communications device and mobile radio communications network device, having advantages over such known methods and devices.

According to a first aspect of the present invention there is provided a method of controlling tracking area signalling within a cellular mobile radio communications network, comprising the steps of, determining if the mobile radio communications devices is stationary, providing an indication to the network that the mobile radio communications device is stationary and, in the network, assigning at least one tracking area and/or an equivalent tracking area list to the mobile radio communications device responsive to the indication that the mobile radio communications device is stationary.

The invention proves particularly advantageous insofar as it can serve to reduce the paging overload for stationary mobile radio communication devices UEs.

The invention advantageously recognises that the reduction in paging overload during periods when the UE is stationary can prove particularly beneficial.

Further, the invention can prove particularly advantageous insofar as it can serve to reduce paging overload for stationary UEs by incorporating the particular advantages from the above mentioned known TA configurations, i.e. cells belonging to multiple TAs with overlapping and hierarchial TAs, and cells with multiple TA assignment, i.e. employing equivalent TA lists.

As a particular advantage, the TA, or equivalent TA list, assigned to the mobile radio communications device is the one best suited to the specific requirements relevant to the stationary nature of the UE.

Preferably, the step of determining if the mobile radio communications device is stationary is conducted within the mobile radio communications device.

In particular, the mobile radio communications device is considered to be stationary if it is determined that the device is not changed cell for a predetermined time period.

In one embodiment, the aforementioned predetermined time period has a duration determined by a periodic TA update timer.

The said indication provided to the network can advantageously comprise a signalling flag.

In particular, the flag can be provided within a periodic TA update message.

As an alternative, the said indication to be provided to the network can be provided through the inclusion of the current cell identification within the signalling.

The at least one TA and/or an equivalent TA list can be assigned so as to provide the mobile radio communications device with the smallest appropriate TA available.

Yet further, if the cell belongs to multiple TAs, the network can be arranged to assign a smaller TA if available.

Alternatively, if the cell belongs to a single TA and the mobile radio communications device has been previously assigned multiple TAs, the network can serve to assign reduced TAs in an equivalent TA list, or to assign a single TA to the mobile radio communications device.

Advantageously, the method includes the further step of determining whether or not the mobile radio communications device is no longer stationary and if so providing an appropriate indication in that regard to the network.

Such indication that the mobile radio communications device is now stationary can be provided within the next periodic TA update message.

In particular, the indication can be provided by way of a flag set within the message.

As an alternative, the indication that the mobile radio communications device is no longer stationary can be provided with the next normal or periodic TA update message depending on which of them happens earlier.

According to another aspect of the present invention, there is provided a mobile radio communications device arranged for operation within a cellular mobile radio communications network and including means for determining if the device is stationary, means for indicating to the network that it is stationary, and means for receiving assigned at least one tracking area and/or an equivalent tracking area list from the network, the assigned at least one tracking area and/or equivalent tracking area list having been sent from the network responsive to the said indication that the device is stationary.

In particular, the means for determining if the device is stationary is arranged to determine whether there has been no change in cell for a predetermined time period.

The said predetermined time period can as before comprise the duration of a periodic TA update timer.

Further, the means for indicating to the network that the mobile radio communications device is stationary can comprise means for providing a signaling flag.

In particular, the flag can be provided within a periodic TA update message. As an alternative, the means for indicating the network that the mobile radio communications device is stationary can comprise means for including the current cell identification within the signalling.

As will be appreciated, the assigned at least one TA and/or equivalent TA list received at the mobile radio communications device comprises the smallest appropriate TA or list.

The mobile radio communications device can further include means to provide an indication to the network that the device is no longer stationary.

Such means can be provided as an indication within the next periodic TA update message and, in particular, by way of a flag provided therein or, as an alternative, within the next normal TA update message.

According to yet a further aspect of the present invention there is provided a cellular mobile radio communications network device including means for receiving an indication from a mobile radio communications device that the mobile radio communications device is stationary, and including means for assigning at least one TA and/or an equivalent TA list to the mobile radio communications device responsive to the said indication that the mobile radio communications device is stationary.

In particular, the cellular mobile radio communications network device is arranged to receive a signalling flag serving to indicate that the mobile radio communications device is stationary.

Further, the signalling flag can be provided within a periodic TA update message. As an alternative, the cellular mobile radio communications network device can be arranged to receive signalling including the current cell identification from the mobile radio communications device and serving to provide an indication that the mobile radio communication device is stationary.

In one particular embodiment, the means for assigning the at least one TA and/or an equivalent TA list is arranged to assign the smallest appropriate TA, or TA list, to the mobile radio communications device.

Yet further, the cellular radio communications network device can be arranged such that, if the cell is found to belong to a plurality of TAs, the cellular radio communications network device is arranged to assign a smaller TA if available.

Alternatively, if the cell is found to belong to a single TA, but the mobile radio communications device has previously been assigned multiple TAs, the cellular radio communications network device can be arranged to reduce the TAs in the equivalent TA list, or assign a single TA to the mobile radio communications device.

As will therefore be appreciated from the above, the present invention provides for a particularly efficient and simple arrangement for reducing a paging overhead for stationary UEs for scenarios in which cells belong to multiple TAs and scenarios in which cells belong to normal, i.e. fixed TAs with multiple (equivalent) TA list assignments in the TA update.

The invention can prove advantageous in reducing paging signalling overhead in any scenario in which the UE is likely to remain stationary, whether in a domestic of commercial environment.

The invention is described further hereinafter, by way of example only, with reference to the accompanying drawings, in which:
Fig. 1 is a signalling diagram illustrating an embodiment of the present invention when a UE is stationary within a cell;
Fig. 2 is a timing diagram arising in accordance with an embodiment of the present invention when the UE is no longer stationary; and
Fig. 3 is a schematic block diagram of a mobile radio communications device according to an embodiment of the present invention.

As will be appreciated from the above, the present invention relates in particular to stationary UEs in Multiple Tracking Areas and serves to reduce the paging overload for such stationary UEs. The invention addresses in particular problems relating to an overload in the paging as the UE is paged in a large number of cells, especially if the UE is stationary. There is a realization that the UEs are stationary most of the time, for example when left on during the night or when in an office environment. Reducing the paging overload during these stationary periods can prove particularly beneficial. The invention serves to reduce the paging overload for stationary Ues by focussing on aspects from TA configurations cells belonging to multiple Tas (overlapping and hierarchical TAs) and cells with multiple TA assignment (equivalent TAs list). As appreciated from the discussion above, and important aspect is the adoption of "Stationary in Cell" criteria. The UE can detect when it is stationary within a cell. The criteria for this can be that the UE has not changed the cell for the duration of certain time. For example if no reselection has happened for the duration of the periodic TA update timer the UE can set a Stationary in Cell (SiC) flag ON. As soon as UE re-selects, it can set the SiC flag back OFF. It will be appreciated that the periodic TA timer duration is network specific.

Then when the Stationary in Cell criteria has been fulfilled, the UE indicates this to the network. One example is that the UE can includes the SiC flag in the Periodic TA Update message. This new SiC flag in the Periodic TA Update message indicates to the network whether the UE has (SiC flag=OFF) or has not (Sic flag=ON) moved from the cell for at least the time set by the periodic TA update timer. It should of course be appreciated that this does not exclude other ways of indicating to the network by means of other existing signalling or indeed new specific designated signals. Optional inclusion of the current cell ID could also serve as an indication to the network of the fact that the UE has become stationary within the cell.

Irrespective of how it arises, the Stationary in Cell indication to the network allows the network to assign to the UE the smallest and most appropriate available TA or equivalent TA list. Thus if, the cell belongs to multiple TAs, the network can choose and assign a smaller TA if available. If, however the cell belongs to a single tracking area but the UE has been previously assigned multiple Tas (equivalent TAs), the network can consider reducing the TAs in the equivalent Ta list or assigning single TA to the UE.

Thus the stationary UE is paged in a smaller TA or smaller list of TAs and as a result the paging overhead while UE is stationary is considerably reduced.

As soon as the UE indicates to the network that Stationary in Cell criteria is not fulfilled any more (UE has left the cell or cell re-selection happened) the network considers the UE as not stationary. This could be indicated to the network again explicitly by using the next periodic TA update message with SiC flag set OFF (if the UE reselects without leaving the TA) or implicitly by next normal TA update message (if the UE reselects and changes the TA). This does not exclude the use of any other existing signalling or new designated signals.

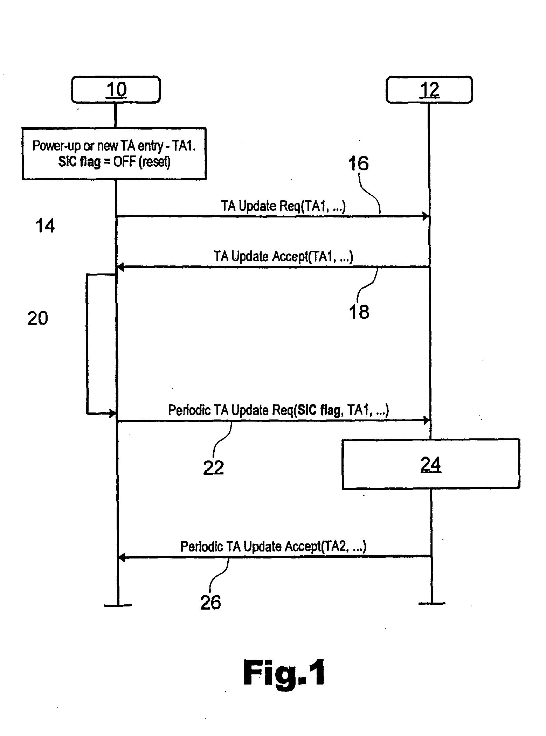

Turning now to Fig. 1, there is provided a signalling diagram arising in relation to the UE that is stationary within a cell.

Within the diagram there is illustrated UE 10 and a related network device 12 and wherein the UE 10 is arranged to provide a signalling flag, identified as a Stationary in Cell "SiC flag" serving to indicate whether or not the UE 10 is stationary within the cell.

Within Fig. 1, and as indicated at box 14, at power-up, or if a new TA entry is provided, the SiC flag is set OFF. As a result of the power-up or new TA entry a TA update signalling 16 is sent-from the UE 10 to the network device 12 and, in return, the network device issues a TA update accept signal 18. Within the embodiment illustrated in Fig. 1, the UE 10 remains stationary within the cell for a predetermined time. The stationary nature of the UE 10 can be identified through the UE not seeking reselection for the duration of the periodic TA update timer in which a period is indicated by arrow 20.

Should no such reselection be requested during this period, the SiC flag is then set ON and thereby serves to indicate within periodic TA update request signal 22 sent to the network device 12 that the UE 10 is stationary.

At processing block 24, and having received the SiC flag ON within the periodic TA update signal, the network device 12 is arranged to assign a new smaller TA, or smaller equivalent TA list, to the UE 10 to reduce the paging overhead while the UE 10 remains stationary.

The information relating to the TA now assigned to the UE 10 is delivered as signal 26 in Fig. 1.

Thus, this embodiment of the invention exhibits novel aspects such as the adoption of a SiC flag at UE side and which is set ON if there are no cell re-selections for the time set by the periodic TA update timer, but which can be reset by any cell reselection.

Further, the inclusion of the SiC flag in the Periodic TA Update message serves to indicate to the network the fact that the UE has become stationary in the cell for at least the duration of the TA update timer. This serves as an advantageously simple way of relaying the SiC flag to the network by way of existing signalling.

Then, the network, responsive to the SiC flag set ON in the periodic TA update message and the Cell Id itself, selects smaller or more appropriate TA/equivalent TA list (if available) and reduces the paging overhead while the UE is stationary.

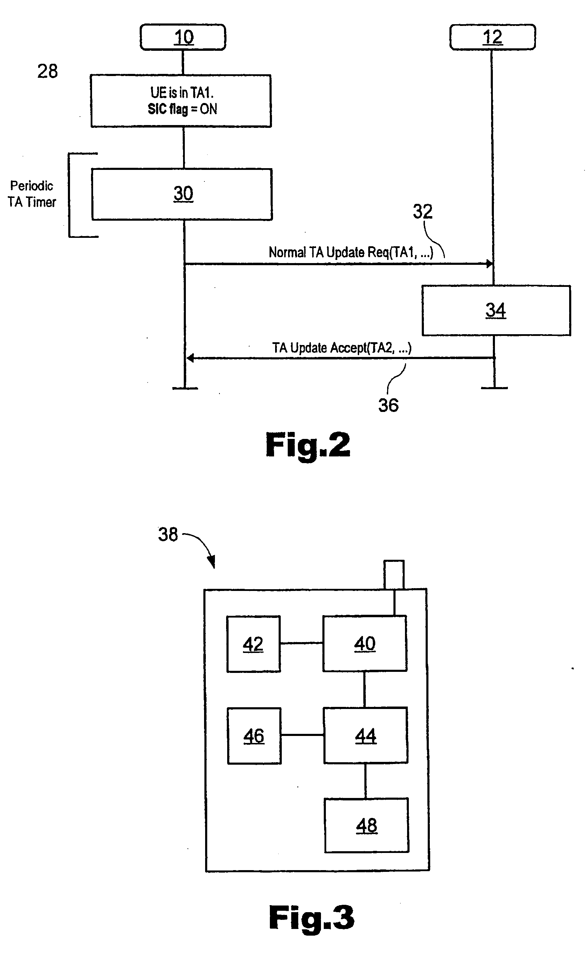

Turning now to Fig. 2, a similar signalling scenario is illustrated between UE 10 and the network device 12 and which starts from a situation in which the SiC flag is set ON within the UE 10 as indicated in initiating step 28.

However, at step 30, the UE 10 serves to select a new cell that is in a different TA from that previously selected and as a result, the criteria set for determining whether or not the UE is stationary within the cell is met such that the SiC flag is set OFF.

Advantageously, the UE 10 implicitly indicates this to the network device 12 by means of the TA update procedure that is triggered by the TA change and as represented by signal 32.

On receipt of this signal, and at step 34, the network device 12 can determine that the UE is not longer stationary. As a result the network device 12 will assign to the UE 10 a TA or list of TAs in signal 36 with the knowledge that the UE 10 is no more stationary, which means back to normal.

Finally, reference is made to Fig. 3 which illustrates, in schematic form, a mobile radio communications device such as a cellular phone handset 38 according to an embodiment of the present invention.

The handset 38 comprises the standard transceiver 40, memory 42 and processing unit 44 but, in addition, further includes means 46 for determining if the handset 38 is stationary within a cell such that an appropriate indication can be delivered to the network, and further, means 48 for receiving and processing a TA, or equivalent TA list, as assigned from the mobile radio communications network.

It should however be appreciated that the invention is not restricted to the details of the foregoing illustrated embodiment. For example, any appropriate means for determining whether or not the UE is stationary can be employed and one of a variety of arrangements can be provided for indicating to the network that the user equipment is, or is not, stationary as appropriate.

As will be appreciated, the invention proves advantageous in reducing the paging overload for stationary UEs and as based upon the important realisation that reduction in paging overload achieved responsive to a determination that the UE is stationary, can prove particularly beneficial in view of the relatively long periods of time within which UEs are found to be stationary.

As noted, the present invention provides that the UEs can detect when they are stationary on the basis of one or a variety of different criteria. When the particular chosen criteria has been fulfilled, the UE can establish a flag serving to indicate its stationary nature and subsequently inform the network of that fact by way of existing, or specially provided, signalling. In response to such an indication, the network can then assign to the UE the most appropriate TA or TA list and thereby reduce the paging overhead.

## Claims

1. A method of controlling tracking area signalling within a cellular mobile radio communications network, comprising the steps of, determining if the mobile radio communications devices is stationary, providing an indication to the network that the mobile radio communications device is stationary and, in the network, assigning at least one tracking area and/or an equivalent tracking area list to the mobile radio communications device responsive to the indication that the mobile radio communications device is stationary.

2. A method as claimed in Claim 1, wherein the step of determining if the mobile radio communications device is stationary is conducted within the mobile radio communications device.

3. A method as claimed in Claim 1 or 2, wherein the mobile radio communications device is considered to be stationary if it is determined that the device is not changed cell for a predetermined time period.

4. A method as claimed in Claim 2, wherein the said predetermined time period comprises the duration of a periodic TA update timer.

5. A method as claimed in Claim 1, 2, 3 or 4, wherein the said indication provided to the network can advantageously comprise a signalling flag.

6. A method as claimed in Claim 5, wherein the flag is provided within a periodic TA update message.

7. A method as claimed in any one or more of Claims 1 to 6 wherein the said indication to be provided to the network is provided by way of current cell identification data.

8. A method as claimed in any one or more of the preceding claims, wherein if the cell belongs to multiple TAs, the network can be arranged to assign a smaller TA if available.

9. A method as claimed in any one or more of Claims 1 to 7, wherein if the cell belongs to a single TA and the mobile radio communications device has been previously assigned multiple TAs, the network assigns reduced TAs in an equivalent TA list, or assigns a single TA to the mobile radio communications device.

10. A method as claimed in any one or more of the preceding claims and including the step of determining whether or not the mobile radio communications device is no longer stationary and providing an appropriate indication in that regard to the network.

11. A method as claimed in Claim 10, wherein the said indication that the mobile radio communications device is stationary is provided within the next periodic TA update message.

12. A method as claimed in Claim 11, wherein the said indication is provided by way of a flag set within the message.

13. A method as claimed in Claim 10, wherein the said indication that the mobile radio communications device is no longer stationary is provided within the next normal TA update message.

14. A mobile radio communications device arranged for operation within a cellular mobile radio communications network and including means for determining if the device is stationary, means for indicating to the network that it is stationary, and means for receiving assigned at least one tracking area and/or an equivalent tracking area list from the network, the assigned at least one tracking area and/or equivalent tracking area list having been sent from the network responsive to the said indication that the device is stationary.

15. A device as claimed in Claim 14, wherein the means for determining if the device is stationary is arranged to determine whether there has been a change in cell for a predetermined time period.

16. A device as claimed in Claim 15, wherein the said time period comprises the duration of a periodic TA update timer.

17. A device as claimed in Claim 14, 15 or 16, wherein the means for indicating to the network that the mobile radio communications device is stationary can comprises means for providing a signalling flag.

18. A device as claimed in Claim 17, wherein the flag is provided within a periodic TA update message.

19. A device as claimed in anyone or more of Claims 14 to 18, wherein the means for indicating to the network that the mobile radio communications device is stationary comprises means for including the current cell identification within the signalling.

20. A device as claimed in any one or more of Claims 14 to 19 and further including means providing an indication to the network that the device is no longer stationary.

21. A cellular mobile radio communications network device including means for receiving an indication from a mobile radio communications device that the mobile radio communications device is stationary, and including means for assigning at least one TA and/or an equivalent TA list to the mobile radio communications device responsive to the said indication that the mobile radio communications device is stationary.

22. A network device as claimed in Claim 21 and arranged to receive a signalling flag serving to indicate that the mobile radio communications device is stationary.

23. A network device as claimed in Claim 22, wherein the signalling flag is provided within a periodic TA update message.

24. A network device as claimed in Claim 21, 22 or 23 and arranged to receive signalling including the current cell identification from the mobile radio communications device and serving to provide an indication that the mobile radio communication device is stationary.

25. A network device as claimed in claim 21, 22, 23 or 24, and arranged such that, if the cell is found to belong to a plurality of TAs, the cellular radio communications network device is arranged to assign a smaller TA if available.

26. A network device as claimed in Claim 21, 22, 23 or 24, wherein, if the cell is found to belong to a single TA, but the mobile radio communications device has previously been assigned multiple TAs the cellular radio communications network device is arranged to reduce to the TAs in the equivalent TA list, or assign a single TA to the mobile radio communications device.

27. A method of controlling tracking area signalling substantially as hereinbefore described with reference to, and as illustrated in Figs. 1 and 2 of the accompanying drawings.

28. A mobile radio communications device substantially as hereinbefore described with reference to, and as illustrated in, Fig. 3 of the accompanying drawings.

29. A mobile radio communications network device substantially as hereinbefore described with reference to the accompanying drawings.
